# EUROPEAN PATENT APPLICATION

(11) **EP 4 807 481 A1**
(43) Date of publication of application: **16.09.2026**
(21) Application number: 25162827.7
(22) Date of filing: 11.03.2025
(51) Int. Cl.: G05D 1/229, G05D 105/28, G05D 1/698, G05D 107/90, G05D 109/10, G05D 1/85

(54) **SYSTEM AND METHOD FOR CONTROLLING AUTONOMOUS VEHICLES**

(71) Applicant: Volvo Autonomous Solutions AB, 405 08 Göteborg (SE)
(72) Inventor: WIBERG, Wilhelm, 436 39 ASKIM (SE); BERGQUIST, Stefan, 417 27 GÖTEBORG (SE)
(74) Representative: Kransell & Wennborg KB

(57) **Abstract**

A computer system (100) for trajectory planning of a plurality of autonomous vehicles (10, 10a to 10n) operating within a confined geographical area (200), the computer system comprising processing circuitry (102) configured to: determine positions and trajectories of the plurality of autonomous vehicles within the confined geographical area; determine that a primary positioning system of at least one autonomous vehicle receives low confidence positioning data or no positioning data, such that the at least one autonomous vehicle is controlled by any one of a degraded primary positioning system and a secondary positioning system; determine, based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone (224, 226, 228) located within the confined geographical area, the predefined geographical zone having at least one operational restricting condition for the autonomous vehicles; and determine to adapt the trajectory of the at least one autonomous vehicle to an alternative trajectory.

## Description

### TECHNICAL FIELD

The disclosure relates generally to the field of controlling vehicles operating in a confined geographical area, in particular autonomous heavy-duty vehicles operating in a confined area. In particular aspects, the disclosure relates to a computer system, a vehicle, and methods for controlling autonomous vehicles operating in a confined geographical area. The disclosure can be applied to heavy-duty vehicles, such as trucks, buses, and construction equipment, among other vehicle types. In particular, the disclosure can be applied to autonomous vehicles, such as unmanned autonomous vehicles operating in a confined geographical area. Although the disclosure may be described with respect to a particular vehicle, the disclosure is not restricted to any particular vehicle.

### BACKGROUND

Autonomous vehicles have witnessed widespread adoption in various industries, transforming efficiency and safety in tasks such as material transport and handling in confined geographical areas, e.g., transportation of bulk material from a loading zone to an unloading zone. However, challenges persist when deploying autonomous vehicles during changing environmental conditions, as well as in hilly terrains in the confined geographical area.

By way of example, hilly terrains introduce complexities in navigation, requiring vehicles to adapt to varying inclines and declines while maintaining operational performance. In confined spaces, such as loading areas, the maneuverability of autonomous vehicles may also become a critical factor for avoiding collisions and ensuring the safety of both equipment and personnel. Moreover, the maneuverability of autonomous vehicles in confined spaces may occasionally experience challenges in positioning determination due to various disturbances, such as disturbances in the signal processing of the positioning data.

Thus, there is a continuing need for further improvements in the vehicle control and motion management of heavy-duty vehicles, such as autonomous heavy-duty vehicles operating in a confined geographical area.

### SUMMARY

According to a first aspect of the disclosure, there is provided a computer system for trajectory planning of a plurality of autonomous vehicles, in particular a plurality autonomous heavy-duty vehicles, operating within a confined geographical area. The computer system comprises processing circuitry configured to determine positions and trajectories of the plurality of autonomous vehicles within the confined geographical area; determine that a primary positioning system of at least one autonomous vehicle receives low confidence positioning data or no positioning data, such that the at least one autonomous vehicle is controlled by any one of a degraded primary positioning system and a secondary positioning system; determine, based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone located within the confined geographical area, the predefined geographical zone having at least one operational restricting condition for the autonomous vehicles; and determine to adapt the trajectory of the at least one autonomous vehicle to an alternative trajectory.

The disclosure is at least partly based on the realization that deploying and controlling autonomous vehicles, such as autonomous electric heavy-duty vehicles, in a confined geographical area may still be challenging in terms of providing efficient operations of the vehicles. By way of example, autonomous vehicle operations may be compromised in environments where absolute positioning data (e.g., from GNSS) is unreliable, such as in areas with obstructions that disrupt signal reception. Examples of such areas include tunnels, which fully block the signal, and tall walls or buildings, which can cause signal reflections leading to inaccurate positioning. Additionally, autonomous vehicle operations may also be compromised in environments when absolute positioning relies on lidar technology combined with a pre-recorded map. Complications may arise particularly when data loss occurs due to sensor coverage issues or changes in environmental features. Sensor coverage may be temporarily obstructed by elements such as dust or rain, further affecting positioning accuracy.

The first aspect of the disclosure may seek to enhance the resilience of autonomous vehicle operations for a plurality of vehicles, particularly in environments where absolute positioning data is degraded or unavailable, such as areas where traditional GPS-based positioning systems may fail. More specifically, the disclosure aims to sustain a high level of operational productivity by determining proximity to predefined geographical zones and dynamically adapting navigation in real-time, even in the absence of reliable absolute positioning data.

A technical benefit may include improving resilience against positioning system degradation by enabling real-time trajectory modifications. More specifically, the proposed computer system may enhance or at least maintain productivity while ensuring safety. The configuration of the computer system may allow vehicles to operate and execute their designated missions in a less conservative manner than conventional traffic planning systems. By enabling such a configuration, the likelihood may increase that, in the event of degradation or failure of the primary positioning system, the vehicles may continue operating for an extended period before experiencing interruptions, without compromising safety.

The proposed computer system may also reduce vehicle downtime, enabling continued operation while avoiding restricted zones. Specifically, the proposed computer system may not only maintain safety by reducing the risk of unintended entry into restricted areas defined by the predefined geographical zones, but also enhance navigation robustness by allowing vehicles to continue operating under uncertain positioning conditions, thus increasing, or at least maintaining productivity of the fleet of vehicles.

Furthermore, an additional technical advantage may include the ability of the proposed computer system to enable the vehicles to continue navigating safely within the confined geographical area by utilizing data from the secondary positioning system when the primary positioning system is unreliable. Typically, when low confidence in the primary positioning system is detected, e.g. when low confidence in absolute positioning data is detected, the computer system determines to use, or switch to, a secondary positioning system in the form of a relative positioning system. The computer system then estimates the vehicle position relative to the predefined geographical zone and adapts the trajectory of the vehicle to an alternative trajectory.

By adapting the trajectory to an alternative trajectory, the computer system proactively mitigates the risk of unintended entry into predefined geographical zones by heavy-duty autonomous vehicles, particularly when absolute positioning data is degraded, thereby ensuring compliance with operational restrictions and enhancing safety and production within the confined geographical area.

To this end, the proposed computer system allows for a more sustainable and cost-effective utilization of vehicle fleets in confined geographical areas.

Typically, the previously determined position by the primary positioning system is a positioning point of the at least one autonomous vehicle determined from absolute positioning data. For example, the previously determined position by the primary positioning system is the latest positioning point of the at least one autonomous vehicle determined from absolute positioning data. For example, the previously determined position of the at least one autonomous vehicle is determined from the latest received high-confidence absolute positioning data.

In the following, a number of examples of the alternative trajectory will be provided, including an alternative trajectory that avoids entering the predefined geographical zone, an alternative trajectory that increases the distance between the at least one autonomous vehicle and the predefined geographical zone, an alternative trajectory that determines a trade-off between the estimated shortest distance to a target location and the likelihood of entering the predefined geographical zone to minimize overall travel time while maintaining safety, an alternative trajectory that stops the vehicle in a location where stopping is preferable, and an alternative trajectory that directs the vehicle into an area where the primary positioning system is capable of receiving high-confidence positioning data.

Optionally, in some examples, including in at least one preferred example, the processing circuitry may be configured to determine that the at least one autonomous vehicle, while being controlled by any one of the degraded primary positioning system and the secondary positioning system, is within a distance from at least one predefined geographical zone; and determine to adapt the trajectory of the at least one autonomous vehicle to the alternative trajectory in response to the determination. A technical benefit may include early intervention in trajectory adaptation, further reducing the risk of unintended entry into restricted areas by allowing the vehicle to respond before reaching the boundary of the predefined geographical zone. For example, the processing circuitry may be configured to adapt the trajectory of the at least one autonomous vehicle to the alternative trajectory when the determined distance to the predefined geographical zone is below a threshold distance. An additional benefit of early intervention may be enabling a more efficient trajectory adaptation. By adjusting at an earlier stage, the optimal adaptation-such as the most fuel-efficient, shortest, or otherwise optimal route-may still be achievable. In contrast, a delayed adaptation may result in fewer available options, potentially preventing the most efficient adjustment.

Optionally, in some examples, including in at least one preferred example, the processing circuitry may be configured to determine to adapt the trajectory of the at least one autonomous vehicle to an alternative trajectory that avoids entering the predefined geographical zone. A technical benefit may include reducing the impact from any operational restricting condition on the vehicle when performing its operation(s).

Optionally, in some examples, including in at least one preferred example, the processing circuitry may be configured to adapt the trajectory of the at least one autonomous vehicle to an alternative trajectory comprising increasing a distance between the at least one autonomous vehicle and the predefined geographical zone. A technical benefit may include adding a safety margin to the operational restricting condition, ensuring that even if positioning errors accumulate over time, the vehicle remains outside predefined geographical zone.

Optionally, in some examples, including in at least one preferred example, the processing circuitry may be configured to adapt the trajectory to the alternative trajectory by determining a trade-off between an estimated shortest distance to a target location and a determined likelihood of entering the predefined geographical zone. A technical benefit may include improving route planning by balancing efficiency and safety, allowing the vehicle to navigate towards its destination while dynamically avoiding restricted areas. Such configuration may help in reducing unnecessary detours.

Optionally, in some examples, including in at least one preferred example, the processing circuitry may be configured to adapt the trajectory of the at least one autonomous vehicle to an alternative trajectory comprising stopping the vehicle in a location where stopping is preferable. A technical benefit may include enhancing safety by preventing unintended entry into restricted zones and allowing the vehicle to remain in a known safe location until reliable positioning data is restored or further instructions are provided.

Optionally, in some examples, including in at least one preferred example, the processing circuitry may be configured to adapt the trajectory of the at least one autonomous vehicle to an alternative trajectory comprising directing the vehicle into an area where the primary positioning system is capable of receiving high-confidence positioning data. A technical benefit may include improving navigation reliability by enabling the vehicle to proactively move towards areas where absolute positioning data is more likely to be available, thereby reducing reliance on degraded or secondary positioning systems.

Optionally, in some examples, including in at least one preferred example, the secondary positioning system may comprise any one of an inertial measurement unit, lidar, radar, ultrasonic sensor, mono camera, stereo camera, wheel speed sensor, steering angle sensor, and gyroscope. Optionally in some examples, including in at least one preferred example, the relative positioning system may comprise the inertial measurement unit, lidar, radar, ultrasonic sensor, mono camera, stereo camera, wheel speed sensor, steering angle sensor, and the gyroscope. A technical benefit may include providing a robust and versatile systematic approach to vehicle positioning and environmental perception, enabling the autonomous vehicle to adapt to a wide range of operational environments by leveraging different sensor technologies.

Optionally, in some examples, including in at least one preferred example, the secondary positioning system may be configured to estimate the vehicle position relative to the predefined geographical zone using odometry data collected over time, the odometry data comprising at least one of vehicle speed data, vehicle acceleration data, turning rate data, wheel rotation data, vehicle orientation data, and relative distance traveled data. A technical benefit may include improving vehicle localization in the absence of absolute positioning, enabling continuous operation under conditions where e.g. GPS is unavailable or unreliable, such as in tunnels.

Optionally in some examples, including in at least one preferred example, the odometry data may contain the vehicle speed data, the vehicle acceleration data, the turning rate data, the wheel rotation data, the vehicle orientation data, and the relative distance traveled data. A technical benefit may include the ability to utilize a comprehensive set of vehicle dynamics data to enhance the accuracy of the relative positioning system. This multifaceted approach allows for a more nuanced understanding of vehicle movement, contributing to safer and more efficient navigation decisions.

Optionally, in some examples, including in at least one preferred example, the secondary positioning system may be a relative positioning system.

Optionally, in some examples, including in at least one preferred example, the primary positioning system may be an absolute positioning system.

Optionally, in some examples, including in at least one preferred example, the processing circuitry may further be configured to generate a position boundary zone around the at least one autonomous vehicle, the position boundary zone being indicative of the growth, over time, of position uncertainty of the at least one autonomous vehicle. A technical benefit may include enhanced risk estimation, allowing trajectory planning to account for positioning uncertainty dynamically. For example, the aim may be both to maintain the vehicle outside the geographical zone and to prevent the expansion of the uncertainty region into the zone. In other words, the estimated position of the vehicle should remain outside the geographical zone, regardless of the actual vehicle position.

Optionally, in some examples, including in at least one preferred example, the processing circuitry may be configured to generate the position boundary zone based on a previously determined position of the at least one autonomous vehicle, the previously determined position being a positioning point determined from absolute positioning data. A technical benefit may include improving position estimation accuracy by ensuring that the position boundary zone is anchored to a previously determined absolute position, which may reduce cumulative errors over time and allow for more reliable trajectory adjustments.

Optionally, in some examples, including in at least one preferred example, the processing circuitry may be configured to predict an entrance of the vehicle into the predefined geographical zone based on an estimated vehicle position relative to the predefined geographical zone, and further configured to determine that the vehicle is approaching the predefined geographical zone based on the predicted entrance into the predefined geographical zone. A technical benefit may include further enhancing preemptive decision-making, thereby further increasing productivity efficiency, while maintaining operational safety.

Optionally, in some examples, including in at least one preferred example, the processing circuitry may be configured to adapt the trajectory to the alternative trajectory based on the predicted vehicle entrance into the predefined geographical zone and the operational restricting conditions applying to the predefined geographical zone. A technical benefit may include ensuring regulatory and safety compliance by dynamically modifying the trajectory in accordance with the operational constraints of a particular zone, thereby reducing risks associated with unauthorized zone entry.

Optionally, in some examples, including in at least one preferred example, the processing circuitry may be configured to predict an entrance of the vehicle into the predefined geographical zone using the generated position boundary zone. A technical benefit may include further enhancing preemptive decision-making, thereby further increasing productivity efficiency, while maintaining operational safety.

Optionally, in some examples, including in at least one preferred example, the processing circuitry may be configured to control the at least one autonomous vehicle according to the alternative trajectory. A technical benefit may include providing a structured response mechanism for handling positioning uncertainty, ensuring that trajectory adaptation decisions are executed by the computer system.

Optionally, in some examples, including in at least one preferred example, the processing circuitry may be configured to determine, based on a latest determined position and trajectory of the at least one autonomous vehicle, that the at least one autonomous vehicle, while being controlled by any one of the degraded primary positioning system and the secondary positioning system, approaches at least one other autonomous vehicle. A technical benefit may include providing an even more improved trajectory planning in terms of productivity and safety.

Optionally, in some examples, including in at least one preferred example, the processing circuitry may be implemented in a central control system for the confined geographical area. A technical benefit may include improving fleet-wide safety and coordination, enabling centralized management of multiple autonomous vehicles in the confined geographical area.

According to a second aspect of the disclosure, there is provided a system comprising the computer system according to the first aspect, and a plurality of autonomous vehicles, in particular a plurality autonomous heavy-duty vehicles, controllable by the computer system. The second aspect of the disclosure may seek to solve the same problem as described for the first aspect of the disclosure. Thus, effects and features of the second aspect of the disclosure are largely analogous to those described above in connection with the first aspect of the disclosure. Another technical benefit may include improving fleet-wide safety and coordination, enabling centralized management of multiple autonomous vehicles in the confined geographical area.

According to a third aspect of the disclosure, there is provided a computer-implemented method for trajectory planning of a plurality of autonomous vehicles, in particular a plurality autonomous heavy-duty vehicles, operating within a confined geographical area, the method comprising: determining, by processing circuitry of a computer system, positions and trajectories of a plurality of autonomous vehicles within the confined geographical area; determining, by the processing circuitry, that a primary positioning system of at least one autonomous vehicle receives low confidence positioning data or no positioning data, such that the at least one autonomous vehicle is controlled by any one of a degraded primary positioning system and a secondary positioning system; determining, by the processing circuitry, and based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone located within the confined geographical area, the predefined geographical zone having at least one operational restricting condition for the autonomous vehicles; and determining, by the processing circuitry, to adapt the trajectory of the at least one autonomous vehicle to an alternative trajectory.

The third aspect of the disclosure may seek to solve the same problem(s) as described for the first to second aspects of the disclosure. Thus, effects and features of the third aspect of the disclosure are largely analogous to those described above in connection with the first and second aspects of the disclosure.

According to a fourth aspect of the disclosure, there is provided a computer program product comprising program code for performing, when executed by the processing circuitry comprised in the computer system of the first aspect, the method of the third aspect.

According to a fifth aspect of the disclosure, there is provided a non-transitory computer-readable storage medium comprising instructions, which when executed by the processing circuitry of the first aspect, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIGS. 1A** - **1B** illustrate exemplary views of autonomous heavy-duty vehicles configured to operate within a confined geographical area, according to an example.
**FIG. 2** illustrates an exemplary overview of a confined geographical area with a number of autonomous heavy-duty vehicles, according to examples.
**FIG. 3** illustrates another exemplary overview of a confined geographical area with a number of autonomous heavy-duty vehicles, according to examples.
**FIG. 4** is a flow chart of an exemplary method to control a vehicle according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure is at least partly based on the realization that deploying and controlling autonomous vehicles, such as autonomous electric vehicles, in a confined geographical area may still be challenging in terms of providing a reliable and safe operation of the vehicle. By way of example, autonomous vehicle operations can be compromised in environments where absolute positioning data (e.g., from GNSS) is unreliable, such as in areas with obstructions that disrupt signal reception. Examples of such areas include tunnels that fully block the signal, tall walls or buildings that can lead to signal reflections causing inaccurate positioning. Autonomous vehicle operations can also be compromised in environments where absolute positioning relies on lidar technology combined with a pre-recorded map. Complications arise particularly when data loss occurs due to sensor coverage issues or changes in environmental features. Sensor coverage can be temporarily obstructed by elements such as dust or rain.

Moreover, for autonomous operation zones in confined areas, there is typically a need for maintaining prescribed speed thresholds to mitigate collision risks involving autonomous vehicles (AVs), interactions between AVs and manually operated vehicles, and occasionally, encounters between AVs and vulnerable road users (VRUs). One approach to enforce such regulations is through geofencing technology, whereby predefined geographical zones are delineated and associated with predefined operational conditions, such as speed limits. Upon an entry of an AV into a predefined geographical zone, the corresponding operational condition may be automatically enforced, for instance, adjusting the vehicle speed to comply with the speed limit in the geographical zone. Additionally, geofencing allows for the integration of various other functional mandates related to vehicle operation within these zones. For example, to enhance VRU safety, certain areas can be configured to initiate emergency halting of the AV. Such safety protocol can be activated when the AV either enters or is on the verge of entering such zones, thereby ensuring immediate cessation of the vehicle to prevent potential harm to VRUs present within these the geographical zones.

Geofencing is a recognized technology that typically depends on the precise positioning of a vehicle in conjunction with pre-established or predefined geographical zones and their associated operational directives. However, there is a challenge in controlling AVs in environments where consistent positioning may be challenging, such as in tunnels, near high structures that cause signal reflections, or under conditions where sensor coverage is temporarily obstructed.

One way of addressing such a challenge is by enabling the AV to utilize a relative positioning system as a fallback positioning system in response to receiving absolute positioning data of low confidence. The AV, upon detecting low-confidence absolute positioning data, transitions to relative positioning to estimate its position relative to predefined geographical zones and subsequently adapts its operational behavior in accordance with the applicable operational restrictions. Such a configuration of the control system of the AV allows an individual vehicle to continue operating with reduced reliance on absolute positioning data. However, such a configuration is primarily focused on vehicle-level decision-making and may not fully account for broader site-level traffic and trajectory management.

For these and other reasons, there is still a need for improving the operations of autonomous vehicles in confined geographical areas.

To remedy this, the present disclosure provides a computer system, a system including the computer system and a plurality of vehicles, and methods for controlling at least one of the vehicles in the confined geographical area.

Thus, the disclosure may seek to enhance the resilience of autonomous vehicle operations for a plurality of vehicles, particularly in environments where absolute positioning data is degraded or unavailable, such as areas where traditional GPS-based positioning systems may fail. More specifically, the disclosure aims to sustain a high level of operational productivity by determining proximity to predefined geographical zones and dynamically adapting navigation in real-time, even in the absence of reliable absolute positioning data. A technical benefit may include improving resilience against positioning system degradation by enabling real-time trajectory modifications. More specifically, the proposed computer system may enhance or at least maintain productivity while ensuring safety. The configuration of the computer system may allow vehicles to operate and execute their designated missions in a less conservative manner than conventional traffic planning systems. By enabling such a configuration, the likelihood may increase that, in the event of degradation or failure of the primary positioning system, the vehicles may continue operating for an extended period before experiencing interruptions, without compromising safety. The proposed computer system may also reduce vehicle downtime, enabling continued operation while avoiding restricted zones. Specifically, the proposed computer system may not only maintain safety by reducing the risk of unintended entry into restricted areas defined by the predefined geographical zones, but also enhance navigation robustness by allowing vehicles to continue operating under uncertain positioning conditions, thus increasing, or at least maintaining productivity of the fleet of vehicles. Furthermore, an additional technical advantage may include the ability of the proposed computer system to enable the vehicles to continue navigating safely within the confined geographical area by utilizing data from the secondary positioning system when the primary positioning system is unreliable. Typically, when low confidence in the primary positioning system is detected, e.g. when low confidence in absolute positioning data is detected, the computer system determines to use, or switch to, a secondary positioning system in the form of a relative positioning system. The computer system then estimates the vehicle position relative to the predefined geographical zone and adapts the trajectory of the vehicle to an alternative trajectory. To this end, the proposed computer system allows for a more sustainable, productive and cost-effective utilization of vehicle fleets in confined geographical areas.

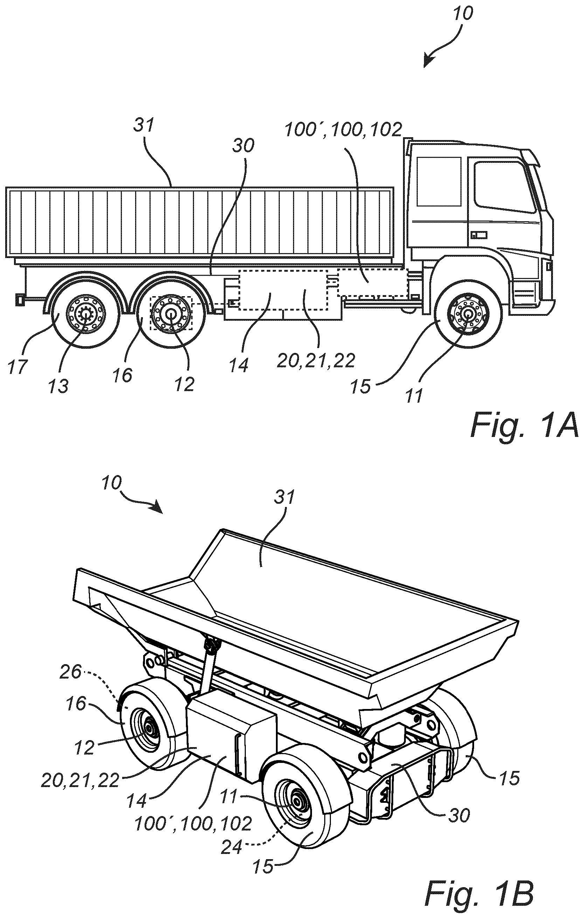

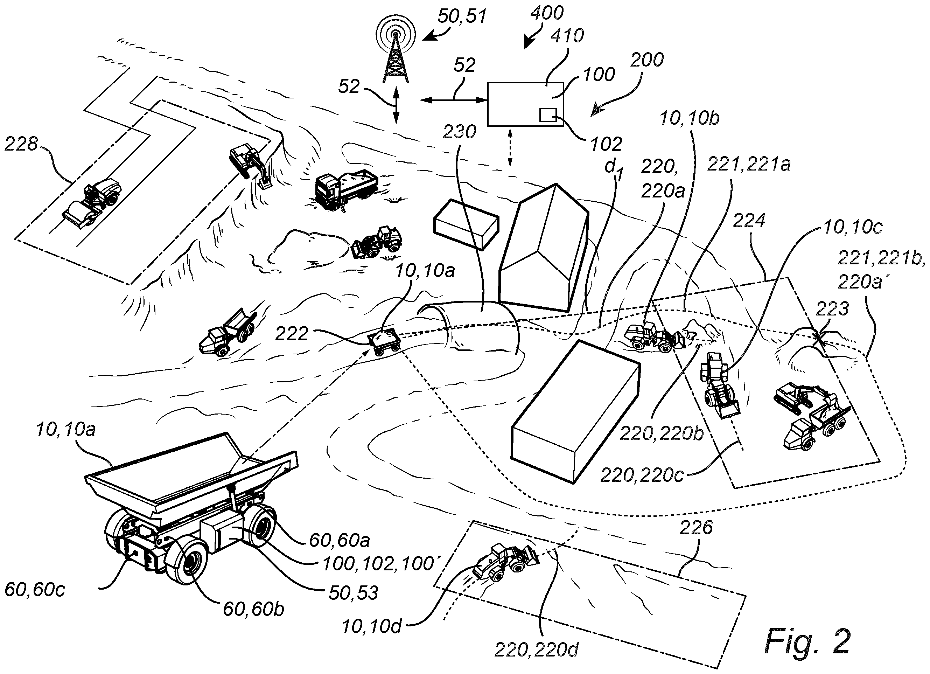

Examples of such computer systems and vehicles will now be described in relation to FIGS. 1A to 1B, in combination with FIGS. 2 to 5.

In FIG. 1A, there is illustrated one example of a vehicle 10. The vehicle 10 is here a heavy-duty vehicle, such as a truck. While the vehicle 10 in FIG. 1A is illustrated as a truck, the vehicle 10 may be of any type of vehicle suitable for transporting people and/or goods, such as bulk material from one location to another. For example, the vehicle may be an excavator, loader, articulated hauler, dump truck, truck or any other suitable vehicle known in the art. In some examples, the vehicle 10 may be driven by an operator. The vehicle 10 is an autonomous vehicle. Hence, the vehicle 10 is an autonomous heavy-duty vehicle. Such vehicle 10 may be controlled by a vehicle motion management (VMM) unit configured to individually control one or more vehicle units, one or more vehicle axles, and one or more wheels of the vehicle. For ease of reference, the autonomous heavy-duty vehicle will be denoted simply as the vehicle.

In FIG. 1A, the vehicle 10 is also an electric vehicle. Accordingly, the vehicle 10 is an autonomous electric vehicle. The vehicle 10 comprises a powertrain system 14. The powertrain system 14 comprises a propulsion unit 20. The propulsion unit may be provided by one or more electrical machines. In other types of arrangement, the propulsion unit 20 may include a traction-supporting internal combustion engine. The propulsion unit is 20 typically an energy converting unit configured to provide a torque. In this example, the propulsion unit 20 is an electric machine.

The electric machine 20 is further powered by a battery system and/or a fuel cell system. Hence, the powertrain system 14 here also comprises any one of a battery system 21 and a fuel cell system 22. In other words, the powertrain system 14 is an electric powertrain system and the vehicle 10 is a fully electrical vehicle. However, in some examples, the vehicle 10 may also include a supporting internal combustion.

Accordingly, the powertrain system 14 in FIG. 1A comprises at least one propulsion unit in the form of one or more electric machines 20, the battery system 21 and the fuel cell system 22.

The powertrain system 14 is configured to provide traction power for the vehicle 10. The traction power is delivered to one or more ground engaging members 15, 16, 17, e.g. one or more wheels of the vehicle 10. By way of examples, the traction power is delivered to the wheels, such as the wheels 15 by any one of the battery system 21 and the fuel cell system 22 in cooperation with one or more electric machines 20.

Electric machines 20 are responsible for converting electrical energy from the battery system 21 or fuel cell system 22 into mechanical power to drive the vehicle's wheels. The electric machine 20 is thus configured to provide traction power to the vehicle 10. The electric machine 20 is configured to be connected to the battery system 21 and the fuel cell system 22. It should be noted that the powertrain system 14 may be provided with a plurality of electric machines 20.

The powertrain system 14 may further comprise additional components as is readily known in the field of electrical propulsions systems, such as a transmission for transmitting a rotational movement from the electric machine(s) to a propulsion shaft, sometimes denoted as the drive shaft (not shown). The propulsion shaft connects the transmission to the wheels. Some vehicles may use a traditional multi-speed transmission, while others employ single-speed transmissions or direct-drive configurations for simplicity and efficiency. Furthermore, although not shown, the electrical machine 20 is typically coupled to the transmission by a clutch. The electric machine 20 is arranged to receive electric power from any one of the battery system and the fuel cell system. The electric machine 20 is here also arranged specifically as a traction electric machine for the vehicle. The traction electric machine is configured to provide traction power to the vehicle 10.

Moreover, as illustrated in FIG. 1A, the vehicle 10 comprises a chassis 30 and a load carrying container 31 connected to the chassis 30. The chassis 30 is configured to support the load carrying container 31. The load carrying container 31 is configured to carry materials, such as mining shovel or the like.

As depicted in FIG. 1A, the vehicle 10 is supported by wheels 15, 16, 17, where each wheel comprises a tire. The vehicle 10 comprises multiple axles, including a front axle 11 and a number of rear axles 12, 13. The front axle 11 is here considered as a first wheel axle. Moreover, one of the rear axles, such as the rear axle 12, is considered as the second wheel axle. The tractor unit has front wheels 15 which are normally steered, and rear wheels 16, 17 of which at least one pair are driven wheels. Any one of the front axle 11 and the rear axles 12, 13 may be configured to be driven by the powertrain system 14. In some examples, only the front axle is driven by the powertrain system 14. In other examples, only one of the rear axles, such as the rear axle 12, is driven by the powertrain system 14. In yet other examples, all axles 11, 12, 13 are driven by the powertrain system 14.

FIG. 1B schematically illustrates another example of an autonomous electric vehicle 10. The vehicle 10 of FIG. 1B is a load carrying vehicle in the form of a hauler. The load carrying vehicle 10 comprises the chassis 30, the load carrying container 31 connected to the chassis 30, and a plurality of wheels 15, 16. The vehicle 10 of FIG. 1B further comprises the front axle 11. The front axle 11 is provided with the pair of wheels 15. Moreover, the vehicle 10 of FIG. 1B comprises the rear axle 12. The rear axle 12 is provided with the corresponding set of pair of wheels 16. The vehicle 10 of FIG. 1B is also an example of an autonomous electric vehicle comprising front wheel and rear wheel steering. Hence, the vehicle 10 here comprises a front wheel steering device 24 and a rear wheel steering device 26. Each one of the front wheel steering device 24 and the rear wheel steering device 26 is configured to control steering of the respective axle and its corresponding wheels. Each one of the front wheel steering device 24 and the rear wheel steering device 26 is connected to a computer system of the vehicle 10, which here is a sub-computer system 100' of the computer system 100 for a number of vehicles withing a confined geographical area. Hence, the computer system 100, and/or the sub-computer system 100', may be configured to control steering of the front axle 11 and the rear axle 12. The steering of the front axle 11 and the rear axle 12 can be performed either individually, or in combination. As such, the computer system 100, and/or the sub-computer system 100', may be configured to control steering of the front axle 11 and the rear axle 12 by means of the front wheel steering device 24 and the rear wheel steering device 26, respectively. Such steering is automatically controlled by the computer system 100, as is commonly known within the field of autonomous vehicles.

The vehicles 10 in FIGS. 1A and 1b further comprise one or more brakes, which are provided e.g. in the form of one or more service brakes. The first (left) and second (right) driven wheels are typically arranged to be braked by respective first and second service brakes. Each one of the service brakes may, e.g., be a pneumatically actuated disc brake or drum brake. The wheel service brakes are controlled by corresponding brake controllers (not illustrated). Each one of the wheel brake controllers is here communicatively coupled to the computer system 100, and/or the sub-computer system 100', allowing the computer system 100 to communicate with the brake controllers, and thereby control vehicle braking. These parts of the powertrain system 14 are conventional parts in an electric powertrain system, and thus not further described herein.

The computer system 100, and/or the sub-computer system 100', may also be configured to control the transfer of torque from the electric machine 20, i.e. from the powertrain system 14, to the wheels, such as the front wheels 15. The computer system 100, and/or the sub-computer system 100', may also be configured to control the transfer of torque from the electric machine 20, i.e. from the powertrain system 14, to plurality of set of wheel, such as the front wheels 15 and the rear wheels 16. By way of example, the computer system 100, and/or the sub-computer system 100', may be configured to feed torque transfer command to the electric machine 20 to transfer torque to the wheels via the driven axle(s) of the vehicle 10.

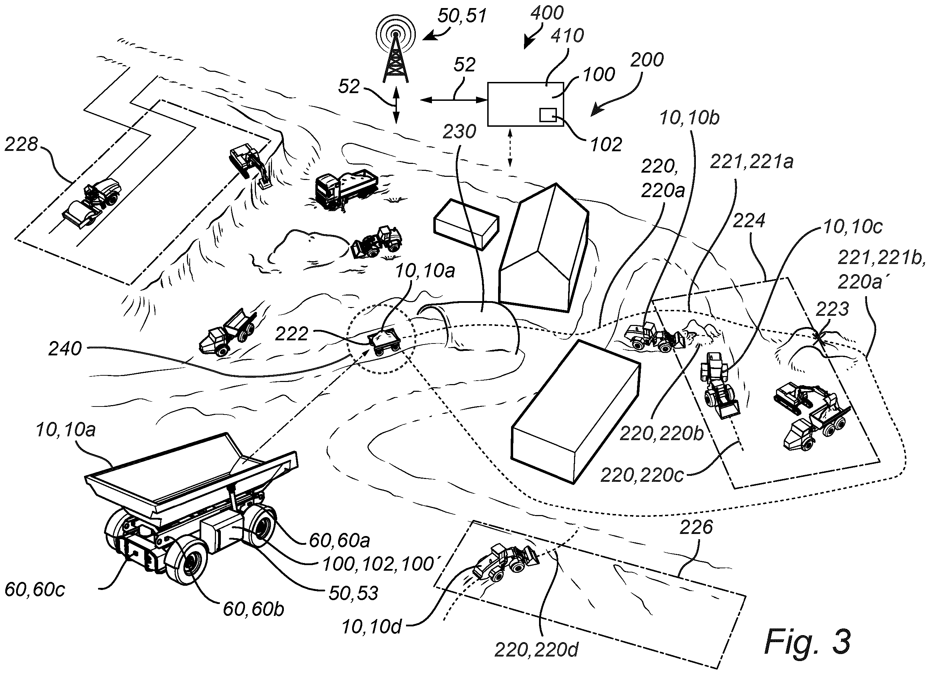

The autonomous vehicle 10 of any one of FIGS. 1A to 1B may be configured to autonomously navigate in a confined geographical area 200 as illustrated in FIGS. 2 and 3. The vehicles 10 are controlled by the computer system 100, typically in combination with respective sub-computer system 100' of the vehicles 10. By way of example, the vehicles 10 in the confined geographical area 200 are controlled along one or more vehicle pathways 220 in the form of routes comprising a set of route segments, as illustrated in e.g. FIGS. 2 and 3. To navigate within the confined geographical area 200 and along the route, the vehicle 10 needs to know its location with respect to the route. To locate the vehicle 10 with respect to the route, a localization service may be used. In this example, the computer system 100, and/or the sub-computer system 100', is configured to be in communication with a primary positioning system 50, such as an absolute positioning system, and a secondary positioning system 60, such as a relative positioning system, as depicted in e.g. FIG. 2. In the following, the examples will be described in relation to an arrangement in which the primary positioning system is provided in the form of the absolute positioning system 50 of the vehicle 10 and the secondary positioning system is provided in the form of the relative positioning system 60 of the vehicle 10.

The absolute positioning system 50 is configured to determine a geographic location of the vehicle 10 in the confined geographical area 200. The absolute positioning system 50 is configured to determine the geographic location based on a global reference frame, typically latitude, longitude, and sometimes altitude. One example of an absolute positioning system is the Global Navigation Satellite System (GNSS). The GNSS is configured to find the location of the vehicle 10 based on communication with satellites. The GNSS may for example be GPS or any other alternatives, e.g. BeiDou, Galileo, GLONASS, or any other suitable satellite positioning system. GPS utilizes a constellation of satellites orbiting the Earth to provide location information to receivers on the ground.

The absolute positioning system 50 typically comprises one or more satellites, an antenna 51, a signal receiver 53, such as a GPS receiver, arranged in the vehicle 10, and a communication link 52 configured to transfer positioning data streams (positioning signal) between the antenna 51, the signal receiver 53, the sub-computer system 100', and the computer system 100.

Moreover, the absolute positioning system 50 is a wireless communication system, which may comprise any suitable wireless device configured to communicate with any number of suitable network entities in a wireless network forming the communication link 52. Based on a signal from the wireless device, such as the GPS receiver 50, the network entities may be able to triangulate the position of the wireless device, and thereby also locate the vehicle 10, and report the location back to the wireless device. Any other suitable methodology for locating the vehicle 10 with the use of the wireless network may also apply. For example, this may be any suitable telecommunications positioning methodology, e.g. by using ultra-wide band positioning and triangulation.

Moreover, while GNSS may typically represent the most appropriate technology for the computer system 100, and/or the sub-computer system 100', it may also be possible to incorporate RTK (Real-Time Kinematic) to enhance the GNSS system by providing real-time corrections, thereby improving positioning accuracy. Furthermore, the feasibility of employing an absolute positioning system utilizing lidar technology in conjunction with a pre-recorded map may also be conceivable. Such map could be developed using a SLAM (Simultaneous Localization and Mapping) algorithm.

Further, the autonomous vehicle 10 comprises the secondary positioning system 60, as depicted in e.g. FIG. 2. The secondary positioning system is e.g. a relative positioning system 60 of the vehicle 10. The relative positioning system 60 is configured to determine a position of the vehicle 10 in relation to other objects, such as other vehicles, or points of reference (without necessarily knowing its exact geographic coordinates). As such, the relative positioning system 60 is configured to determine a relative position of the vehicle 10 in relation to other objects, such as other vehicles, or points of reference, in the confined geographical area 200.

In one example, the relative positioning system 60 is configured to estimate the vehicle position relative to the at least one geographical zone over time based on odometry data. Accordingly, the relative positioning system 60 here comprises one or more odometry acquiring devices. The odometry data contains any one of vehicle speed data, vehicle acceleration data, turning rate data, wheel rotation data, vehicle orientation data, and relative distance traveled data. By way of example, the relative positioning system 60 comprises any one of an inertial measurement unit, lidar, radar, ultrasonic sensor, mono camera, stereo camera, wheel speed sensor, steering angle sensor, and gyroscope. These devices are examples of odometry acquiring devices. Typically, the relative positioning system 60 comprises plurality of units and sensors, such as a set of sensors including lidar, radar, camera, and ultrasonic sensors. In this manner, the relative positioning system 60 is configured to measure the distance and angle between the vehicle 10 and surrounding objects, allowing the vehicle to navigate its environment, avoid obstacles, and maintain a safe distance from other vehicles. Any sensor in the set of sensors may be mounted at any suitable location of the vehicle 10. In one example, the set of sensors comprises at least one 2D Lidar sensor 60a, at least one 3D Lidar sensor 60b, at least one camera unit 60c, or any other suitable sensor. In some examples, the at least one 2D Lidar sensor may be arranged on multiple or all sides of the vehicle 10, e.g. such that the at least one 2D Lidar sensor is capable of scanning all surroundings of the vehicle 10. The at least one 3D Lidar sensor may be arranged on the roof of the vehicle 10 to be able to scan 360 degrees around the vehicle 10 and/or in the corners of the vehicle 10 to provide about 270 degrees of field of view. The at least one camera unit may comprise one or more different types of camera units arranged in one or more places of the vehicle 10. The at least one camera unit may comprise a Red, Green, Blue and Depth (RGBD) sensor camera unit which can record the surroundings and account for depth. The at least one camera unit may additionally, or alternatively, comprise any one of one or more infrared cameras, heat cameras, stereo cameras. It should be noted that the relative positioning system 60 is typically also configured to be in communication with the absolute positioning system 50.

The relative positioning system 60 has a lower accuracy than the absolute position data from the absolute positioning system 50.

The operations of a number of vehicles 10 in the confined geographical area 200 using their respective relative positioning systems 60 and the absolute positioning systems 50 will now be further described with reference to FIGS 2 and 3.

Turning to FIG. 2, there is illustrated a number of vehicles 10, including the autonomous heavy-duty vehicles 10a to 10d, operating within a confined geographical area 200. In FIG. 2, the vehicles 10 are autonomous heavy-duty vehicles, particularly autonomous heavy-duty electric vehicles. For ease of reference, the autonomous heavy-duty vehicles will be denoted simply as vehicles 10. Moreover, although the disclosure of FIG. 2 may only focus on a few vehicles, such as vehicles 10a to 10d, the methods and configurations of the computer system 100 can apply to any numbers of vehicles 10a to 10n. In FIG. 2, the confined geographical area 200 corresponds to a quarry area. The confined geographical area 200 can be defined in several different manners, as is commonly known in the art.

By way of example, defining the confined geographical area 200 for the vehicles 10 here involves specifying the boundaries and parameters within which these vehicles 10 are authorized to operate. The definition of the confined geographical area 200 often includes considerations for geographic limits and operational boundaries for the vehicles 10. More specifically, the confined geographical area 200 for the vehicles 10 is defined by any one of geographic coordinates, which specifies the geographical coordinates (latitude and longitude) that define the boundaries of the area, physical landmarks, which identifies physical landmarks or boundaries that set the edges of the confined area, and digital mapping, which utilizes digital mapping technologies to create a virtual boundary for the confined area. GPS-based mapping systems can e.g. be employed to create a geofence, a virtual perimeter that the vehicles 10 should not cross. Triangulation and/or RFID (RadioFrequency Identification) may also be used to further create a virtual boundary.

In the operation of the vehicles 10 within the confined geographical area 200, it is often necessary to impose predefined operational restrictions, such as speed limitations, to mitigate the risk of collisions between the vehicles 10, interactions with manually operated vehicles, and, in certain scenarios, potential hazards involving vulnerable road users. Conventionally, such restrictions are enforced through geofencing, wherein specific geographical zones are associated with designated operational conditions, such that when a vehicle enters or is anticipated to enter a geographical zone, the corresponding operational restriction is applied.

The definition of the confined geographical area 200 may thus also be based on operational boundaries, which specify operational restricting within the confined geographical area 200. The operational restricting may include speed limits, acceleration limits, deceleration limits, turning radius limits, specific routes, or areas where certain vehicle behaviors are restricted or encouraged. The definition of the confined geographical area 200 may also be based on environmental conditions, such as. weather conditions, lighting, or specific road surfaces. The definition of the confined geographical area 200 may also be based on legal and regulatory framework and various safety measures.

In FIG. 2, the confined geographical area 200 comprises a plurality of predefined geographical zones, such as the three predefined geographical zones 224, 226 and 228. Each one of these predefined geographical zones comprises at least one operational restricting condition. The term "operational restricting condition", as used herein, typically refers to specific rules, regulations, or requirements that restrict or dictate the behavior of an autonomous vehicle within a certain geographical zone. Such operational restricting conditions are typically set based on safety protocols, legal requirements, or environmental considerations. Examples of such operational restricting conditions are speed limits, access restrictions, emission restrictions/emission levels, and noise restrictions/noise levels. One common operational restricting condition might be a speed limit specific to a geographical zone, such as an ongoing working zone where the speed limit is reduced during working hours and/or when there are other vehicles operating within the geographical zone. Another example of an operational restricting condition is access restrictions, in which a certain area might restrict vehicle access during specific times or for specific vehicle types (e.g., heavy vehicles banned during certain hours). Another operational restricting condition is an emission restriction. In areas with high pollution levels, there might be restrictions on the operation of vehicles with certain types of engines (e.g., diesel engines) or requirements for reduced emissions. Yet another restricting condition might be noise restrictions. Some geographical zones, particularly near residential areas, might impose restrictions on noise levels, requiring vehicles to operate more quietly.

Also, in order to allow for communication between the vehicles 10, the confined geographical area 200 may generally include a communication protocols so as to establish communication protocols between the vehicles 10 and a central control system 410, or infrastructure within the confined geographical area 200. In this manner, the vehicles 10 can be monitored in real-time and further coordinated in relation to each other. In FIG. 2, the computer system 100 is an integral part of the central control system 410. The central control system 410 may in some examples include, or be an integral part of a server, such as a cloud server.

The vehicles 10 are controlled in an autonomous manner so as to carry out several different transportation missions within the quarry area. As mentioned above, the vehicles 10 are operating along one or more vehicle pathways 220. For example, the vehicles 10a, 10b, 10c and 10d are operating along the respective vehicle pathways 220a, 220b, 220c, and 220d, as illustrated in FIG. 2. In one example, the vehicle 10a is controlled to transport material along a vehicle pathway 220a, from a first starting position (location) 222, such as a loading zone, to a second destination position (location) 223, such as an unloading zone. In addition, or alternatively, another vehicle 10b is controlled to perform one or more quarrying operations, including e.g. removal of material from the earth's surface, along a corresponding vehicle pathway 220b. The materials may e.g. be rock, sand, gravel, limestone, or other minerals.

The vehicle pathway 220 may be defined by the road, including one or more road segments. Typically, the vehicle pathway 220 corresponds to an intended route for the transport (transport mission). In other words, the computer system 100 typically receives transport mission characteristics about the upcoming transport mission, which here includes route data about the intended route. The intended route for the vehicle 10 thus refers to the pathway of the vehicle 10 for performing the transport mission. The vehicle pathway 220 may in some examples correspond to a trajectory (course) that the vehicle 10 is planned to take to perform the transport mission. In other examples, the vehicle pathway 220 is one component of the trajectory. The vehicle pathway 220 typically encompasses the physical route traveled and to be travelled by a vehicle 10, as illustrated in FIG. 2. The route, or intended route, typically refers to a predetermined course for the vehicle 10 to operate from one place to another, e.g. from 222 to 223 along the vehicle pathway 220. The route can include a series of directions or instructions indicating the specific roads or paths to take along the vehicle pathway 220 to reach the destination 223. A trajectory typically refers to a defined path along which a vehicle 10 moves within the confined geographical area 200. The trajectory may be determined and adapted based on positioning data, transmission data, available vehicle pathways, vehicle dynamics, and operational constraints.

Typically, the processing circuitry 102 is here configured to receive travel mission data for the vehicle 10a. In this example, the processing circuitry 102 also receives travel mission data for the other vehicles 10b to 10d within the confined geographical area 200. As such, the computer system 100 receives travel mission data for a plurality of vehicles 10, and typically for all vehicles 10 within the confined geographical area 200. The travel mission data comprises data about intended routes for completing one or more transport missions, such as travel mission data for the vehicle 10a for completing its transport mission along the vehicle path 220a to the destination 223. To this end, the processing circuitry 102 obtains transport mission characteristics for an upcoming transport mission for the vehicle 10a.

The travel mission data can be varied for different types of vehicles 10. By way of example, the travel mission data can contain data indicative of a transportation to transport materials and/or goods from the point 222 (position / location) to the point 223 (position / location) along a planned route, here corresponding to the vehicle path 220a, see e.g. FIG. 2. In other words, the transport should be performed by the vehicle 10a from a geographical starting point (first position) to a geographical destination (second position). The transport may typically be performed along a route, including one or more road segments and/or roads. Hence, the vehicle pathway 220, 220a is here a road. Other examples are also possible, such as transportation of people. The transportation may also include an iterative transportation of materials along a certain route. The processing circuitry 102 is typically configured to determine transport mission characteristics for the upcoming transport mission for the vehicle 10 based on the received transport mission data. The travel mission data can be provided in several different manners to the processing circuitry 102. In addition, the travel mission data may contain several different types of data. By way of example, the travel mission data for an upcoming transport mission for the vehicle 10 comprises transport mission data indicative of at least the destination location 223 and a destination time. The destination time refers to a point in time for the vehicle 10a to arrive at the destination point 223.

In an extended example, the travel mission data further contains transport mission duration data, distance to be traveled and similar transport mission data. The transport mission data may also contain a speed restriction profile for the transport mission, a minimum speed profile for the transport mission, desired or required speed for different segments of the transport mission.

In addition, or alternatively, the processing circuitry 102 is configured to obtain topology data from a number of data sources, such as digital maps, GPS data, or geographic information system (GIS) databases. These sources may generally include relevant information about the road network, including roads, elevation data, inclination data, and potential destinations. In one example, the topology data is received by the processing circuitry 102 from a route planner system of the computer system 100. Topology data may also be received from the vehicles 10. In other examples, the topology data is obtained from previous transport missions along the planned route.

In addition, or alternatively, the topology data of the intended route for the transport mission may comprise relevant data for determining the route profile of the vehicle pathway 220, including elevation changes, inclination and inclination changes, road grade, and terrain type (urban, highway, off-road, etc.).

The processing circuitry 102 is typically configured to obtain real-time absolute positioning data from the vehicles 10 within the confined geographical area 200.

Occasionally, one or more vehicles 10 may experience driving conditions resulting in a loss of positioning detecting via the absolute positioning system 50 due to different factors such as signal blocking etc. In other situations, the confidence in the absolute positioning data may be too low for detecting the position of the vehicle 10 along the vehicle pathway 220. By way of example, tunnels, buildings and hilly terrains within the confined geographical area 200 may introduce complexities and disturbances in navigation, potential affecting the operation performance of the vehicles 10. In FIG. 2, there is illustrated a tunnel 230 potentially affecting the signal from the central computer system 100 to the vehicle 10a. In addition,

To this end, the vehicles 10 may experience unpredictable losses of positioning, which can adversely affect communication between a specific vehicle 10, such as vehicle 10a, and the computer system 100, between multiple vehicles 10 and the computer system 100, as well as between one vehicle 10, such as vehicle 10a, and any adjacent vehicles, such as vehicles 10b to 10d. For example, a loss of positioning within the confined geographical area 200 may cause the vehicle 10a to enter one of the geographical zones 224, 226, or 228 in violation of the operational restriction conditions of these zones, such as exceeding speed limits or breaching other zone-specific regulations.

In FIG, 2, the destination 223 is localized just outside the geographical zone 224, however, requiring the vehicle 10a to cross the geographical zone 224 upon following the vehicle pathway 220a for reaching the destination 223. In this example, the vehicle pathway 220a corresponds to a current determined trajectory for the vehicle 10a. In other transport missions, the destination 223 may be localized within one of the geographical zone 224, 226, 228. In yet other examples, the transport mission may contain deliver of material to several destinations in multiple geographical zones 224, 226, 228.

FIG. 2 further illustrates the computer system 100. As will be described hereinafter, the computer system 100 is configured for trajectory planning of the vehicles 10, such as the vehicles 10a to 10d. While the following example is described in relation to control a single vehicle 10, i.e. the vehicle 10a, the computer system 100 is typically configured to control the other vehicles 10b to 10d in similar fashion. For ease of reference, however, an example of the disclosure is described in relation to a control the vehicle 10a. The configuration of the computer system 100 is typically limited for trajectory planning of the vehicles 10 operating within the confined geographical area 200.

As further illustrated, the computer system 100 comprises processing circuitry 102. The processing circuitry 102 is configured to control one or more vehicles 10, as described herein.

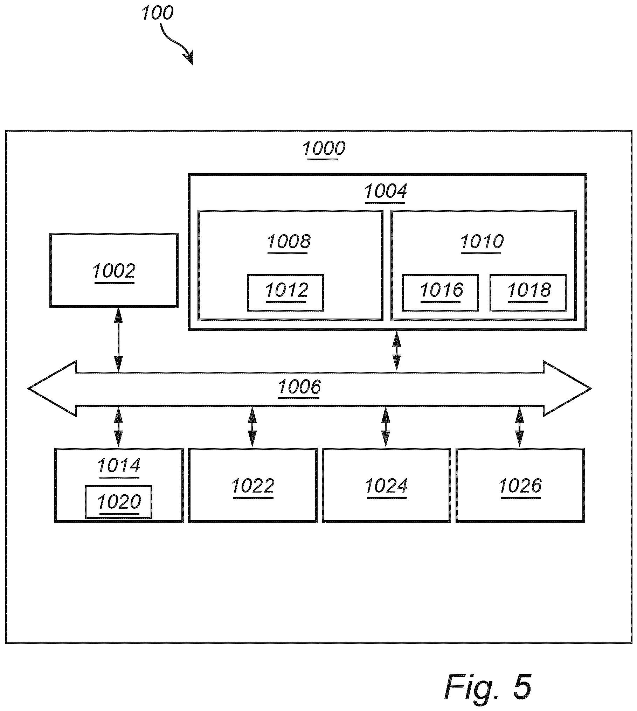

The computer system 100 may also comprise a memory and a system bus (although not illustrated). These components and further optional technical details of the computer system 100 are described in relation to FIG. 5.

The computer system 100 is here an integral part of a centralized site control system 410 for the confined geographical area 200. Hence, the computer system 100 is a part of a remote server, such as the central control system 410, as shown in FIG. 2. The computer system 100 is configured to be in communication with one or more sub-computer systems 100' of the vehicles 10. The sub-computer systems 100' may typically include corresponding processing circuitry. The sub-computer systems 100' may typically also include similar hardware and software as described in relation to the computer system 100.

Hence, in some examples, there is provided a system 400 comprising the central control system 410 including the computer system 100 and further a number of vehicles 10, each one of the vehicles having a sub-computer system 100'. In addition, the computer system 100 of the central control system 410 is configured to be in communication with the sub-computer systems 100' of the vehicles 10, allowing the computer system 100 to control each vehicle 10 according to the methods and configuration of the processing circuitry 102.

As mentioned herein, the processing circuitry 102 is in communication with the absolute positioning system 50 and the relative positioning system 60. The absolute positioning system 50 is here the primary positioning system. The relative positioning system 60 is here the secondary positioning system.

Typically, the positioning of the vehicle 10 within the confined area 200 is controlled by means of the absolute positioning system 50 and the relative positioning system 60 in cooperation with the computer system 100, and further in cooperation with the other components of the powertrain system 14, such as the propulsion unit (e.g. the electric machine 20) and the steering device(s).

The processing circuitry 102 is configured to receive data indicative of the predefined geographical zones 224, 226, 228 within the confined geographical area 200. Each one of the predefined geographical zones 224, 226, 228 comprises one or more operational restricting conditions, as described above. As such, each one of the predefined geographical zones 224, 226, 228 is associated with at least one operational restricting condition for the vehicle(s) 10.

The processing circuitry 102 is further configured determine positions and trajectories of the vehicles 10 within the confined geographical area 200. For example, the processing circuitry 102 determine positions and trajectories of the vehicles 10a to 10d in the confined geographical area 200.

Typically, the positions of the vehicles 10a to 10d are determined by monitoring localization status of the vehicles 10a to 10d in the confined geographical area 200. The localization status may be provided by both the primary and the secondary positioning systems 50, 60. In some examples, it is typically derived from sources such as GPS, lidar-based navigation, or triangulation using alternative measurements, including Wi-Fi, radio signals, or ultra-wideband. Additionally, it may be obtained from the continuous status output of the lidar localization system.

The trajectories 221 of the vehicles 10a to 10d are determined from the data of the vehicle paths and the transport missions, including the destinations for the transport missions of the vehicles 10a to 10d. Accordingly, trajectory determination may be considered part of the mission data. It may also rely on a predefined map containing possible trajectories, with the mission data selecting the appropriate trajectory. Such an approach is typically used when a hauling route remains unchanged over time, in which case the route is predetermined within the map. However, at intersections or decision points, the trajectory may be determined dynamically based on the mission data. A similar approach may apply to speed profiles, where a predefined maximum speed is set, but the actual driving trajectory is determined dynamically using mission data.

As such, for example, the processing circuitry 102 is configured to determine a trajectory 221a of the vehicle 10a, e.g. from transport mission data. More specifically, the processing circuitry 102 is configured to determine the trajectory 221a of the vehicle 10a for reaching the destination 223 in FIG. 2. In this example, the trajectory 221a of the vehicle 10a typically corresponds to the vehicle pathway 220a. The trajectory 221a of the vehicle 10a may also contain data about the direction of the vehicle 10a as well as desired speed for the vehicle 10a along the vehicle pathway 220a.

As illustrated in FIG. 2, the determined trajectory 221a of the vehicle 10a is a route for the vehicle 10a to the destination 223 across the predefined geographical zone 224.

Moreover, the processing circuitry 102 is configured to determine that the primary positioning system 50 of the vehicle 10a receives low confidence positioning data or no positioning data, such that the vehicle 10a is controlled by any one of a degraded primary positioning system 50 and the secondary positioning system 60. Such control may include the alternative of controlling the vehicle solely by means of the degraded primary positioning system 50, solely by means of the secondary positioning system 60, or by means of the combination of the degraded primary positioning system 50 and the secondary positioning system 60. In this context, the primary positioning system 50 is considered as a degraded primary positioning system 50 upon detecting that the absolute positioning data is of low confidence, or that the primary positioning system 50 receives no absolute positioning data at all.

Accordingly, as an example, the processing circuitry 102 determines to use the relative positioning system 60 in response to a detected low confidence in absolute positioning data from the absolute positioning system 50. In other words, when the processing circuitry 102 detects that no reliable absolute positioning data is received from the absolute positioning system 50, the processing circuitry 102 determines to use the relative positioning system 60. As such, the processing circuitry 102 switch from the absolute positioning system 50 to the relative positioning system 60 in response to the detected low confidence in absolute positioning data. In some situations, the computer system 100 may already use both the absolute positioning system 50 and the relative positioning system 60 when the low confidence in absolute positing data is detected. In such situations the computer system 100 determines to only use the relative positioning system 60. Detected low confidence in the absolute positioning data is determined as non-reliable absolute positioning data by the processing circuitry 102.

In the context of the disclosure, low confidence positioning data refers to low confidence in absolute positioning data. The term "low confidence in absolute positioning data", as used herein, typically refers to situations where low confidence in absolute positioning data is detected, typically occurring when the data received from, e.g., global positioning systems (GPS) or other absolute positioning systems is unreliable, inaccurate, or uncertain. This can be due to various factors affecting signal quality and accuracy. Examples of situations when low confidence in absolute positioning data may be detected are signal blockage due to tall buildings, tunnels, or natural terrain features such as mountains, which can block or reflect GPS signals, leading to poor signal quality; signal multipath (e.g., GPS signals can reflect off buildings causing delays and errors in the position data); atmospheric conditions (e.g., atmospheric disturbances can interfere with GPS signal transmission, reducing accuracy); and equipment malfunction (e.g., issues with the GPS receiver or outdated firmware can lead to inaccurate position data). Analogously, a situation where no positioning data is received refers to a situation, in which no absolute positioning data is received.

From a safety system perspective, a degradation or loss of one positioning source may be considered equivalent to a loss of absolute positioning, even if the vehicle can still operate nominally using other available positioning data. In typical implementations, multiple independent localization sources may be supervised to ensure they provide consistent and accurate position estimates. If one source becomes unreliable, absolute positioning may still be maintained in a nominal operational context, allowing the vehicle 10 to continue its designated mission. However, for safety-critical decision-making, the inability to rely on the primary positioning system for safety validation is treated as a loss of absolute positioning.

To this end, detected low confidence in the absolute positioning system 50 amounts to a situation where the absolute positioning system 50 reports no data, or reports data with low confidence. Determining the level of confidence (low, medium, or high) in the readings from the absolute positioning system 50, such as GNSS, typically involves assessing the quality and reliability of the data it provides. Such assessment is here performed by the processing circuitry 102. If the absolute positioning system 50 reports "no data" or explicitly states that the data is of "low confidence," this typically falls under the low confidence category. This could mean the processing circuitry 102 recognizes that the conditions for reliable data are not met (such as insufficient satellites or poor signal quality). "Medium confidence" might be indicated by partial data availability or moderate signal quality and satellite coverage. "High confidence" typically implies conditions with strong, consistent signal reception from multiple satellites, low GDOP, and all system integrity checks passed. In some implementations, achieving high confidence may also require the availability of RTK (Real-Time Kinematic) corrections, which provide enhanced positioning accuracy. A loss of RTK corrections may contribute to degraded positioning accuracy and lead to low confidence in absolute positioning data. These assessments allow the computer system 100 to categorize the confidence level of the positioning data accurately. In one example, the processing circuitry 102 is configured to determine the level of confidence in the absolute positioning data using a threshold level indicative of low confidence. As such, if the level of confidence in the absolute positioning data is below the threshold level, the processing circuitry 102 determines that the absolute positioning data is of low confidence, and thus not reliable for determining the position of the vehicle 10a in the confined geographical area 200.

Accordingly, responsive to the detected low confidence in absolute positioning data, the processing circuitry 102 determines to rely less on the absolute positioning data and typically switches to an operation where the relative positioning system 60 is used for estimating the position of the vehicle 10a within the confined geographical area 200. It should be noted that the relative positioning system 60 can be used also when the absolute positioning system 50 is active to increase accuracy. To this end, the processing circuitry 102 determines to control the vehicle 10a using the degraded primary positioning system and the secondary positioning system upon the determination that the primary positioning system of vehicle 10a is receiving low confidence positioning data or no positioning data.

Moreover, the processing circuitry 102 is configured to determine, based on a previously determined position by the primary positioning system and the determined trajectory 221a of the vehicle 10a, that the vehicle 10a is approaching the predefined geographical zone 224 located within the confined geographical area 200, while being controlled by any one of the degraded primary positioning system and the secondary positioning system. In this example, the predefined geographical zone 224 has an operational restricting condition for the vehicle 10a in form of a maximum speed.

The previously determined position of the vehicle 10a is here a positioning point in the confined geographical area 200. The previously determined position of the vehicle 10a has been determined from reliable absolute positioning data. More specifically, the previously determined position has been determined from high-confidence absolute positioning data transferred from the absolute positioning system 50 to the processing circuitry 102. Typically, the previously determined position of the vehicle is the latest position point determined from the absolute positioning data.

In this example, as illustrated in FIG. 2, the previously determined position of the vehicle 10a corresponds to the location 222. Analogously, the previously determined position of the vehicle 10b corresponds to the position of the vehicle 10b in FIG. 2, the previously determined position of the vehicle 10c corresponds to the position of the vehicle 10c, and the previously determined position of the vehicle 10d corresponds to the position of the vehicle 10d.

As such, the previously determined positioning of the vehicle 10a and any other vehicle 10, such as the vehicles 10b to 10d, are determined from the latest received high-confidence positioning data from the corresponding absolute positioning systems 50 of the respective vehicles 10a to 10d.

In addition, the processing circuitry 102 is configured to determine to adapt the trajectory 221a of the vehicle 10a to an alternative trajectory 221b, as shown in FIG. 2. Determining to adapt the trajectory 221a of the vehicle 10a to the alternative trajectory 221b is based on the above determination that the vehicle 10a is approaching the predefined geographical zone 224 located within the confined geographical area 200, while being controlled by any one of the degraded primary positioning system 50 and the secondary positioning system 60.

As shown in FIG. 2, the alternative trajectory 221b corresponds to a vehicle pathway to the destination 223 that is entirely outside the predefined geographical zone 224 with a restriction in maximum speed.

Hereby, the computer system 100 determines whether it is preferable for the vehicle 10a to enter the predefined geographical zone 224 with modified behavior or to take the alternative trajectory 221b around the predefined geographical zone 224, thereby minimizing disruptions to site operations.

Collectively, the above configuration of the processing circuitry 102 contributes to the ability of the vehicles 10 to operate in a productive manner with maintained safety in complex and dynamically changing environments, enhancing both the safety of the vehicles and the occupants. Moreover, by adapting the trajectory 221a of the vehicle 10a to the alternative trajectory 221b, as shown in FIG. 2, the operational restricting constraint associated with the predefined geographical zone 224 is adhered to while reducing disruption to the operation(s) of vehicle 10a, and likely the operations of the other vehicles, such as the vehicles 10b and 10c operating in the predefined geographical zone 224.

To sum up, each vehicle 10 of the vehicles 10a to 10d periodically, or continuously, transmits data indicative of its current positioning status to the computer system 100. Upon detecting that one of the vehicles 10 is operating under degraded positioning conditions, wherein the primary positioning system 50 of the vehicle 10 provides low-confidence or no absolute positioning data, necessitating reliance on the secondary positioning system 60, such as odometry, inertial measurement units (IMUs), the computer system 100 evaluates whether a current trajectory 221 of the vehicle 10 poses a risk of entry into a predefined geographical zone, such as the predefined geographical zone 224. Upon identifying such a risk, the computer system 100 determines an alternative trajectory to mitigate the likelihood of unintended entry into the predefined geographical zone 224. Unlike other hitherto known solutions that require an individual vehicle to assume a worst-case scenario when absolute positioning is unavailable, the computer system 100 thus leverages site-wide knowledge of vehicle locations, trajectories, and predefined geographical zones to centrally coordinate trajectory modifications for multiple vehicles.

The processing circuitry 102 can be configured to provide various trajectory adaptation alternatives. In one example, the processing circuitry 102 is configured to determine that the vehicle 10a, while being controlled by any one of the degraded primary positioning system 50 and the secondary positioning system 60, is within a distance d1 from the predefined geographical zone 224. The distance d1 is indicated in FIG. 2 for illustrative purposes only. The processing circuitry 102 is configured to determine the distance d1, e.g. using the secondary positioning system 60 and the position of the predefined geographical zone 224.

Moreover, in this example, the processing circuitry 102 is configured to determine to adapt the trajectory 221a of the vehicle 10a to the alternative trajectory 221b in response to the determination. In addition, in this example, the processing circuitry 102 is configured to adapt the trajectory 221a of the vehicle 10a to the alternative trajectory 221b when the determined distance d1 to the predefined geographical zone 224 is below a threshold distance.

The processing circuitry 102 may also be configured to adapt the trajectory 221a of the vehicle 10a to an alternative trajectory comprising increasing a distance between the vehicle 10a and the predefined geographical zone 224. The processing circuitry 102 may thus determine to increasing separation from the predefined geographical zone 224. Hence, in one example, the processing circuitry 102 determines to modify the trajectory 221a of the vehicle 10a to an alternative trajectory 221b, such that the distance d1 between the vehicle 10a and the predefined geographical zone 224 is increased. Such approach is particularly advantageous in scenarios where positioning uncertainty is expected to grow over time. By maintaining a sufficient distance from the predefined geographical zone 224, the vehicle 10a may continue operating without requiring precautionary actions due to positioning uncertainty.

In one example, the processing circuitry 102 is configured to determine to adapt the trajectory 221a of the vehicle 10a to an alternative trajectory 221b that avoids entering the predefined geographical zone 224, as also shown in FIG. 2. For example, the processing circuitry 102 determines to adapt the trajectory 221a of the vehicle 10a to the alternative trajectory 221b when it is determined that the current trajectory brings the vehicle 10a within the proximity of the predefined geographical zone.

In certain circumstances, it may be preferable for a vehicle 10 to enter a predefined geographical zone with modified operational behavior rather than follow a longer trajectory that circumvents the zone entirely. The processing circuitry 102 may therefore determine a trade-off between adherence to predefined geographical restrictions and overall travel efficiency. For example, if a predefined geographical zone imposes a reduced maximum speed, the processing circuitry 102 may determine that allowing the vehicle 10 to enter the predefined geographical zone at the reduced speed is preferable to an alternative trajectory that significantly increases the total travel distance and duration. As such, in one example, the processing circuitry 102 is configured to adapt the trajectory 221a to the alternative trajectory 221b by determining a trade-off between an estimated shortest distance to a target location, such as destination 223, and a determined likelihood of entering the predefined geographical zone 224. Typically, the processing circuitry 102 adapts the trajectory 221a to the alternative trajectory 221b by determining a trade-off between an estimated shortest distance to the target location 223 and a determined likelihood of entering the predefined geographical zone 224 such that the alternative trajectory 221b minimizes overall travel time while maintaining safety.

In certain circumstances, where tunnels and steep inclines are present, it may be desirable to ensure that the vehicles 10 do not stop in hazardous locations due to positioning uncertainty. If a vehicle 10, such as the vehicle 10a, loses absolute positioning data while approaching a predefined geographical zone, such as the zone 226, that mandates stopping in the event of positioning uncertainty, the processing circuitry 102 may determine an alternative trajectory such that, in the event of stopping, the vehicle 10a is positioned in a safe area rather than on a steep incline. As such, in one example, the processing circuitry 102 is configured to adapt the trajectory 221a of the vehicle 10a to an alternative trajectory comprising stopping the vehicle 10a in a location where stopping is preferable. Typically, the processing circuitry 102 is configured to adapt the trajectory 221a of the vehicle 10a to an alternative trajectory comprising stopping the vehicle 10a in a location where stopping is preferable and safe, such as avoiding stops in steep downhill areas.

In addition, or alternatively, the processing circuitry 102 is further configured to determine to redirect a vehicle 10 toward an area where absolute positioning data is expected to be more reliable. For example, if a vehicle 10 operating in a tunnel transitions to using the secondary positioning system 60 due to the absence of GNSS signals, the processing circuitry 102 may modify the trajectory 221a to bring it closer to an open area where absolute positioning data can be reacquired. As such, in one example, the processing circuitry 102 is configured to adapt the trajectory 221a of the vehicle 10a to an alternative trajectory comprising directing the vehicle 10a into an area where the primary positioning system 50 is capable of receiving high confidence positioning data, thereby minimizing the duration and impact of operating under the degraded primary positioning system 50.

Accordingly, with reference to FIG. 2, the processing circuitry 102 is here configured to adapt the trajectory 221a of the vehicle 10 to a number of different the alternative trajectories 221b, including any one of an alternative trajectory that avoids entering the predefined geographical zone 224, an alternative trajectory that increases the distance d1 between the vehicle 10a and the predefined geographical zone 224, an alternative trajectory that determines a trade-off between the estimated shortest distance to a target location 223 and the likelihood of entering the predefined geographical zone 224 to minimize overall travel time while maintaining safety, an alternative trajectory that stops the vehicle 10 in a location where stopping is preferable, and an alternative trajectory that directs the vehicle 10 into an area where the primary positioning system 50 is capable of receiving high-confidence positioning data.

Moreover, the processing circuitry 102 is configured to control the vehicle 10a according to the alternative trajectory 221b. Controlling the vehicle 10 according to the alternative trajectory 221b may include communicating, by the computer system 100, commands to move the vehicle 10a according to the alternative trajectory 221b. The commands may be communicated wirelessly from the computer system 100 of the central control system 410 to the sub-computer system 100' of the vehicle 10a.

In one example, the processing circuitry 102 is configured to select the most suitable alternative trajectory 221b among the number of different the alternative trajectories 221b, e.g. as exemplified above.

In one example, the processing circuitry 102 is configured to predict an entrance of the vehicle 10a into the predefined geographical zone 224 based on an estimated vehicle position relative to the predefined geographical zone 224. In such an example, the processing circuitry 102 is also configured to determine that the vehicle 10a is approaching the predefined geographical zone 224 based on the predicted entrance into the predefined geographical zone 224. For example, the processing circuitry 102 is here configured to adapt the trajectory 221a to the alternative trajectory 221b based on the predicted vehicle entrance into the predefined geographical zone 224 and the operational restricting conditions applying to the predefined geographical zone 224. Estimating the vehicle position relative to the predefined geographical zone 224 is performed based on odometry data collected over time. The odometry data is collected using the secondary positioning system 60. Hence, as mentioned above, the secondary positioning system 60 is used to estimate the vehicle position relative to the predefined geographical zone using odometry data collected over time, and then transfer such data to the processing circuitry 102 for predicting the entrance of the vehicle 10a into the predefined geographical zone 224. As such, the processing circuitry 102 is configured to use the secondary positioning system 60 for estimating a current vehicle position relative to the predefined geographical zone 224. To this end, the secondary positioning system 60 transmits data to the processing circuitry 102, meanwhile the processing circuitry 102 uses positioning data indicative of the last known position of the vehicle 10a, as determined by the primary positioning system 50 from high confidence absolute positioning data. By way of example, the processing circuitry 102 is configured to control the secondary positioning system 60 to utilize the last known vehicle position as determined by the primary positioning system 50, and further predict any entrance of the vehicle 10a into the predefined geographical zones 224 since the last known vehicle position, as determined by the primary positioning system 50.

The processing circuitry 102 is typically configured to establish the vehicle position in the confined geographical area 200 based on a previously determined positioning of the vehicle 10a, as determined from high-confidence absolute positioning data by the primary positioning system 50, and then configured to estimate the vehicle position relative to the predefined geographical zone 224 using the secondary positioning system 60, wherein the previously determined positioning of the vehicle 10a is used as reference point for the processing circuitry 102 and the secondary positioning system 60. It should be noted that the vehicle position relative to the predefined geographical zone 224 refers to the estimated location of the vehicle 10a with respect to the predefined geographical zone 224. Thus, the estimated position may not always be a single precise point but rather a region within which the vehicle is likely located.

Subsequently, the processing circuitry 102 adapts the trajectory 221a based on the predicted vehicle entrance into the predefined geographical zone 224. Typically, the processing circuitry 102 adapts the trajectory 221a based on the predicted vehicle entrance into the predefined geographical zone 224 and the operational restricting conditions applying to the predefined geographical zone 224.

As such, the processing circuitry 102 is configured to adapt the trajectory 221a of the vehicle 10 to the alternative trajectory 221b prior to the entrance of the geographical zone 224.

Typically, although strictly not necessary, the processing circuitry 102 is configured to determine proximity to the nearest predefined geographical zone of a group of predefined geographical zones 224, 226, 228 based on the last-received absolute positioning data from the primary positioning system 50. In addition, the processing circuitry 102 is configured to predict entrance of the nearest predefined geographical zone. Further, the processing circuitry 102 is configured to adapt the trajectory to the alternative trajectory based on the predicted vehicle entrance of the nearest predefined geographical zone.

Typically, the last-received absolute positioning data should also be determined as reliable absolute positioning data. Thus, the processing circuitry 102 is here configured to determine the reliability of the absolute positioning data. For example, the processing circuitry 102 determines that the absolute positioning data is reliable if the data is of medium or high confidence, as mentioned above.

In addition, or alternatively, the processing circuitry 102 is further configured to determine a distance between the vehicle 10a and the destination location 223 in the confined geographical area 200. The determined distance may be used as input in determining the alternative trajectory 221b.

As mentioned above, the processing circuitry 102 is typically configured to determine that the vehicle 10a, while being controlled by the degraded primary positioning system 50 and/or the secondary positioning system 50, approaches at least one other autonomous vehicle 10, such as vehicle 10b. For example, the processing circuitry 102 here determines that the vehicle 10a, while being controlled by the degraded primary positioning system 50 and/or the secondary positioning system 50, approaches the vehicle 10b based on a latest determined position and trajectory of the vehicle 10a and a latest determined position and trajectory of the vehicle 10b. In such an example, the processing circuitry 102 determines to adapt the trajectory 221a of the vehicle 10a based on the determined position and trajectory of the vehicle 10a and the determined position and trajectory of the vehicle 10b. In this manner, the computer system 100 is configured to account for multiple vehicle trajectories simultaneously, allowing for global site-level traffic planning rather than relying solely on individual vehicle decision-making. Hence, instead of vehicles relying on worst-case assumptions when absolute positioning is unavailable, the computer system actively modifies vehicle trajectories to prevent unnecessary operational restrictions. In this context, the selection of an alternative trajectory may also take into account the overall traffic flow on the site, rather than being based solely on what is optimal for the ego vehicle. When multiple alternative trajectories are available after degradation of the primary positioning system 50, the decision on which trajectory to choose may be influenced by factors such as the expected impact on other vehicles' movement and the efficiency of the site-wide traffic system. For example, selecting a trajectory that maintains better primary positioning system capabilities for other vehicles may improve overall traffic planning and optimize the average vehicle speed across the site. By considering these factors, the computer system 100 may ensure that trajectory adjustments contribute not only to maintaining the ego vehicle's operation but also to enhancing overall site efficiency.

Accordingly, in such example, the processing circuitry 102 is configured to determine positions and trajectories of the vehicles 10a, 10b within the confined geographical area 200; determine that a primary positioning system 50 of the vehicle 10a receives low-confidence positioning data or no positioning data, such that the vehicle 10a is controlled by any one of a degraded primary positioning system 50 and a secondary positioning system 60; determine, based on a previously determined position by the primary positioning system 50 and the determined trajectory of the vehicle 10a and the determined trajectory of the vehicle 10b, that the vehicle 10a, while being controlled by any one of the degraded primary positioning system 50 and the secondary positioning system 60, is approaching the predefined geographical zone 224 located within the confined geographical area 200; and determine to adapt the trajectory 221a of the vehicle 10a to an alternative trajectory 221b and to adapt a corresponding trajectory of the vehicle 10b to a corresponding alternative trajectory.

In addition, or alternatively, the processing circuitry 102 may be configured to determine to adapt the trajectory 221a of the vehicle 10a based on the determined position and trajectory of the vehicle 10a and the determined position and trajectory of the vehicle 10b.

Accordingly, the processing circuitry 102 may here be implemented in the centralized control system 410 configured to determine trajectory adaptations for the plurality of vehicles 10 based on their respective determined positioning status.

In addition, or alternatively, the processing circuitry 102 may be configured to generate updated trajectory instructions for the plurality of vehicles 10 and to transmit the trajectory instructions to the respective vehicles 10 for implementation.

In addition, or alternatively, the processing circuitry 102 may be configured to predict the growth of position uncertainty over time for each vehicle 10a, 10b and to adapt the trajectory based on the predicted growth of position uncertainty.

In the above examples, the processing circuitry 102 may typically also be configured to receive data indicative of multiple predefined geographical zones 224, 226, 228 within the confined geographical area 200, and further configured to determine shortest travel distance to each one of the predefined geographical zones of the multiple predefined geographical zones 224, 226, 228 in relation to each one of the vehicles 10, such as vehicles 10a and 10b. As the multiple predefined geographical zones 224, 226, 228 may have different operational restriction conditions, such as different speed limits and/or activation of one or more vehicle functions, the processing circuitry 102 is here typically also configured to receive data indicative of multiple predefined geographical zones having different operational restricting conditions. The computer system 100 may often need to manage a plurality of vehicles 10 in relation to multiple predefined geographical zones 224, 226, 228 simultaneously, particularly if the predefined geographical zones 224, 226, 228 mandate different actions (e.g., speed limits vs. emergency stops).

For completeness, FIG. 2 also illustrates an example of the system 400 comprising the computer system 100 and vehicles 10 controlled by the computer system 100.

FIG. 3 schematically illustrates another example of a confined geographical area 200. The confined geographical area 200, the computer system 100, and the vehicles 10 are the same as in the example of FIG. 2. In addition, in FIG. 3, the processing circuitry 102 is configured to generate a position boundary zone 240 around the vehicle 10a. The generated position boundary zone 240 is indicative of the growth, over time, of position uncertainty of the vehicle 10a. For example, the processing circuitry 102 is configured to generate the position boundary zone 240 based on the previously determined position of the vehicle 10a, such as the position 222 in FIG. 3. As mentioned above, the previously determined position is a positioning point determined from absolute positioning data. As such, the processing circuitry 102 predicts the temporal evolution of positioning uncertainty for the vehicle 10a that is operating under degraded absolute positioning data conditions, which may reduce cumulative errors over time and allow for more reliable trajectory adjustments.

It should be noted that the present disclosure relates primarily to operational situations involving autonomous vehicles where reliable absolute positioning data is low or absent, typically due to detected low-confidence levels in such data. In such circumstances, the vehicle's computer system loses the safe positioning signal that is needed for operation. Accordingly, the operations of the processing circuitry as described herein may typically provide a fallback system to the navigation system, which directly controls the vehicle's movement. As such, the proposed computer system functions to monitor operations and may intermittently intervene to ensure safety during operational anomalies. The aim is thus typically to sustain operations until it is definitively unsafe to continue, which could occur when vehicles, typically both manual and autonomous, are in close proximity. The computer system is also typically designed to monitor the situation conservatively, allowing operations to persist potentially until the safety-critical position data is restored, thus preventing unnecessary halts in operation. For instance, if a manual and an autonomous vehicle operating within the same site lose positional data yet are known to be 2 kilometers apart, it can be safely assumed that they will not collide immediately since significant time is required to cover this distance. This assumption allows operations to continue while the situation is monitored conservatively for safety, e.g. by monitoring positions and trajectories of the vehicles 10 within the confined geographical area 200.

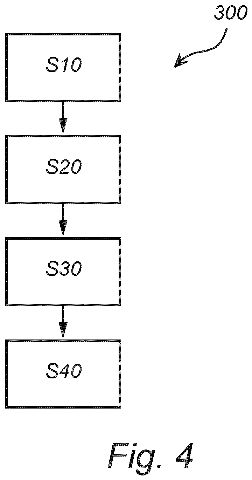

FIG. 4 is a flow chart of an exemplary method to control an autonomous vehicle 10 according to an example. More specifically, FIG. 4 is an exemplary computer implemented method 300 according to an example. Thus the method 300 is implemented by the computer system 100 and the processing circuitry 102, as described herein. The computer-implemented method 300 is intended for trajectory planning of a plurality of vehicles 10, such as the vehicles 10a to 10d operating within the confined geographical area 200. For example, the method 300 is intended for trajectory planning of the vehicle 10a within the confined geographical area 200 in FIGS. 2 to 3.

As illustrated in FIG. 4, the method 300 comprises a step S10 of determining, by the processing circuitry 102 of the computer system 100, positions and trajectories of a plurality of autonomous vehicles 10 within the confined geographical area 200.

Moreover, the method 300 comprises a step S20 of determining, by the processing circuitry 102 of the computer system 100, that a primary positioning system 60 of at least one autonomous vehicle 10a receives low confidence positioning data or no positioning data, such that the at least one autonomous vehicle 10a is controlled by any one of a degraded primary positioning system 50 and a secondary positioning system 60.

In addition, the method 300 comprises a step S30 of determining, by the processing circuitry 102 of the computer system 100, and based on a previously determined position by the primary positioning system 50 and the determined trajectory of the at least one autonomous vehicle 10a, that the at least one autonomous vehicle 10a, while being controlled by any one of the degraded primary positioning system 50 and the secondary positioning system 60, is approaching a predefined geographical zone 224 located within the confined geographical area 200, the predefined geographical zone 224 having at least one operational restricting condition for the autonomous vehicles 10.

Also, the method 300 comprises a step S40 of determining, by the processing circuitry 102 of the computer system 100, to adapt the trajectory 221a of the at least one autonomous vehicle 10a to an alternative trajectory 221b. Hence, the processing circuitry 102 determines the alternative trajectory 221b based on the determination that the at least one autonomous vehicle 10a is approaching the predefined geographical zone 224.

Typically, the processing circuitry 102 further comprises a step of determining the alternative trajectory 221b also based on the determined positions and trajectories of other autonomous vehicles 10 within the confined geographical area 200.

Typically, the method 300 also comprises a step of controlling the at least one autonomous vehicle 10a according to the determined alternative trajectory 221b.

Optionally, in an extended example, the method 300 may further comprise receiving travel mission data for the vehicle 10a performing the travel mission, such as a transport mission, and using the received travel mission data for determining a distance between the vehicle 10a and the destination location 223 in the confined geographical area 200. Such data can be received by the processing circuitry 102. The processing circuitry 102 may typically also receive road topography data for the intended road. The road topography data includes information about the road's elevation, slope, curvature, and other geometric features. Road topography data is for example acquired by the primary positioning system 50 and the secondary positioning system 60, such as the onboard sensors and the GPS, as mentioned herein. The primary positioning system 50 and the secondary positioning system 60 may be integral part of an Autonomous Driving Systems.

For example, the processing circuitry 102 adapts the current trajectory 221a of the vehicle 10a to an alternative trajectory 221b. As shown in FIG. 2, the processing circuitry 102 adapts the current trajectory 221a, in which the vehicle 10a operates along the vehicle pathway 220a to perform its travel mission, such as the transportation of material from position 222 to position 223 within the confined geographical area 200, to the alternative trajectory 221b, in which the vehicle 10a instead operates along the vehicle pathway 220a' to perform its travel mission, such as the transportation of material from position 222 to position 223. Adapting a trajectory 221 of a vehicle 10 typically also includes adapting the driving mode of the vehicle 10. Hence, by way of example, the processing circuitry 102 may adapt the driving mode by adjusting traction power provided to the drive axles and wheels. Adjusting traction power as part of adapting the driving mode may be achieved by controlling the transfer of traction force to the wheels of the front axle 11 and the rear axle 12 (as shown in FIGS. 1A and 1B). The traction force is provided by a propulsion unit, such as the electric machine 20. In some examples, each axle, such as the front axle 11 and the rear axle 12, is powered by a separate electric machine. That is, the vehicle 10 comprises a plurality of electric machines 20. It should also be noted that the computer system 100 may be configured to adapt the traction power to another set of axles among the axles of the vehicle 10, e.g., between the rear axles 12 and 13 (as shown in FIG. 1A). In one example, the processing circuitry 102 also adjusts the propulsion power of the electric machine(s) 20 in response to the adapted trajectory. In other examples, the processing circuitry 102 adapts the driving mode by adjusting a steering angle of the steering device(s) 24, 26 of one or more wheels. Thus, the processing circuitry 102 is configured to adapt the driving mode by adjusting a steering angle of the steering device(s). Such an operation typically includes controlling one or more of the front and rear steering devices 24, 26 based on the adapted trajectory, such as the alternative trajectory 221b.

The above examples described with reference to FIGS. 2 to 4 are provided only as brief illustrative examples of the disclosure to facilitate the description and illustration of the operations of the proposed computer system 100 and the methods disclosed herein.

In some examples, there is provided a computer program product comprising program code for performing, when executed by the processing circuitry 102, the method 300 as described above.

In some examples, there is provided a non-transitory computer-readable storage medium comprising instructions, which when executed by the processing circuitry 102, cause the processing circuitry 102 to perform the method 300 as described above.

Further details of one example of a computer system that can be used as the computer system 100 and/or the sub-computer system 100' will now be described in relation to FIG. 5.

FIG. 5 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system 100 for trajectory planning of a plurality of autonomous vehicles 10, 10a to 10n, in particular a plurality autonomous heavy-duty vehicles, operating within a confined geographical area 200, the computer system comprising processing circuitry 102 configured to: determine positions and trajectories of the plurality of autonomous vehicles within the confined geographical area; determine that a primary positioning system of at least one autonomous vehicle receives low confidence positioning data or no positioning data, such that the at least one autonomous vehicle is controlled by any one of a degraded primary positioning system and a secondary positioning system; determine, based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone 224, 226, 228 located within the confined geographical area, the predefined geographical zone having at least one operational restricting condition for the autonomous vehicles; and determine to adapt the trajectory of the at least one autonomous vehicle to an alternative trajectory.

Example 2: The computer system of example 1, wherein the processing circuitry is configured to determine that the at least one autonomous vehicle, while being controlled by any one of the degraded primary positioning system and the secondary positioning system, is within a distance d1 from at least one predefined geographical zone; and determine to adapt the trajectory of the at least one autonomous vehicle to the alternative trajectory in response to the determination.

Example 3: The computer system of any previous examples, wherein the processing circuitry is configured to determine to adapt the trajectory of the at least one autonomous vehicle to an alternative trajectory that avoids entering the predefined geographical zone.

Example 4: The computer system of any previous examples, wherein the processing circuitry is configured to adapt the trajectory of the at least one autonomous vehicle to an alternative trajectory comprising increasing a distance between the at least one autonomous vehicle and the predefined geographical zone.

Example 5: The computer system of any previous examples, wherein the processing circuitry is configured to adapt the trajectory to the alternative trajectory by determining a trade-off between an estimated shortest distance to a target location and a determined likelihood of entering the predefined geographical zone.

Example 6: The computer system of any previous examples, wherein the processing circuitry is configured to adapt the trajectory of the at least one autonomous vehicle to an alternative trajectory comprising stopping the vehicle in a location where stopping is preferable.

Example 7: The computer system of any previous examples, wherein the processing circuitry is configured to adapt the trajectory of the at least one autonomous vehicle to an alternative trajectory comprising directing the vehicle into an area where the primary positioning system is capable of receiving high-confidence positioning data.

Example 8: The computer system of any previous examples, wherein the secondary positioning system comprises any one of an inertial measurement unit, lidar, radar, ultrasonic sensor, mono camera, stereo camera, wheel speed sensor, steering angle sensor, and gyroscope.

Example 9: The computer system of example 8, wherein the secondary positioning system is configured to estimate the vehicle position relative to the predefined geographical zone using odometry data collected over time, the odometry data comprising at least one of vehicle speed data, vehicle acceleration data, turning rate data, wheel rotation data, vehicle orientation data, and relative distance traveled data.

Example 10: The computer system of any previous examples, wherein the processing circuitry is configured to predict an entrance of the vehicle into the predefined geographical zone based on an estimated vehicle position relative to the predefined geographical zone, and further configured to determine that the vehicle is approaching the predefined geographical zone based on the predicted entrance into the predefined geographical zone.

Example 11: The computer system of example 10, wherein the processing circuitry is configured to adapt the trajectory to the alternative trajectory based on the predicted vehicle entrance into the predefined geographical zone and the operational restricting conditions applying to the predefined geographical zone.

Example 12: The computer system of any previous examples, wherein the processing circuitry is further configured to generate a position boundary zone around the at least one autonomous vehicle, the position boundary zone being indicative of the growth, over time, of position uncertainty of the at least one autonomous vehicle.

Example 13: The computer system of example 12, wherein the processing circuitry is configured to generate the position boundary zone based on a previously determined position of the at least one autonomous vehicle, the previously determined position being a positioning point determined from absolute positioning data.

Example 14: The computer system of any previous examples, wherein the processing circuitry is configured to control the at least one autonomous vehicle according to the alternative trajectory.

Example 15: The computer system of any previous examples, wherein the processing circuitry is configured to determine, based on a latest determined position and trajectory of the at least one autonomous vehicle, that the at least one autonomous vehicle, while being controlled by any one of the degraded primary positioning system and the secondary positioning system, approaches at least one other autonomous vehicle.

Example 16: The computer system of example 15, wherein the processing circuitry is configured to adapt the trajectory of the at least one autonomous vehicle based on the determined position and trajectory of the at least one other autonomous vehicle.

Example 17: The computer system of any previous examples, wherein the processing circuitry is implemented in a central control system 410 for the confined geographical area.

Example 18: A system 400 comprising a computer system of any one of examples 1-17 and a plurality of autonomous vehicles, in particular a plurality autonomous heavy-duty vehicles, controllable by the computer system.

Example 19: A computer-implemented method 300 for trajectory planning of a plurality of autonomous vehicles 10, 10a to 10n, in particular a plurality autonomous heavy-duty vehicles, operating within a confined geographical area 200, the method comprising: - determining, by processing circuitry of a computer system, positions and trajectories of a plurality of autonomous vehicles within the confined geographical area, - determining, by the processing circuitry, that a primary positioning system of at least one autonomous vehicle receives low confidence positioning data or no positioning data, such that the at least one autonomous vehicle is controlled by any one of a degraded primary positioning system and a secondary positioning system; - determining, by the processing circuitry, and based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone located within the confined geographical area, the predefined geographical zone having at least one operational restricting condition for the autonomous vehicles; and - determining, by the processing circuitry, to adapt the trajectory of the at least one autonomous vehicle to an alternative trajectory.

Example 20: A computer program product comprising program code for performing, when executed by processing circuitry, the method of example 19.

Example 21: A non-transitory computer-readable storage medium comprising instructions which, when executed by processing circuitry, cause the processing circuitry to perform the method of example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for trajectory planning of a plurality of autonomous vehicles (10, 10a to 10n), in particular a plurality of autonomous heavy-duty vehicles, operating within a confined geographical area (200), the computer system comprising processing circuitry (102) configured to:
- determine positions and trajectories of the plurality of autonomous vehicles within the confined geographical area;
- determine that a primary positioning system of at least one autonomous vehicle receives low confidence positioning data or no positioning data, such that the at least one autonomous vehicle is controlled by any one of a degraded primary positioning system and a secondary positioning system;
- determine, based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone (224, 226, 228) located within the confined geographical area, the predefined geographical zone having at least one operational restricting condition for the autonomous vehicles; and
- determine to adapt the trajectory of the at least one autonomous vehicle to an alternative trajectory.

2. The computer system of claim 1, wherein the processing circuitry is configured to determine that the at least one autonomous vehicle, while being controlled by any one of the degraded primary positioning system and the secondary positioning system, is within a distance (d1) from at least one predefined geographical zone; and determine to adapt the trajectory of the at least one autonomous vehicle to the alternative trajectory in response to the determination.

3. The computer system of any previous claims, wherein the processing circuitry is configured to determine to adapt the trajectory of the at least one autonomous vehicle to an alternative trajectory that avoids entering the predefined geographical zone.

4. The computer system of any previous claims, wherein the processing circuitry is configured to adapt the trajectory of the at least one autonomous vehicle to an alternative trajectory comprises increasing a distance between the at least one autonomous vehicle and the predefined geographical zone.

5. The computer system of any previous claims, wherein the processing circuitry is configured to adapt the trajectory to the alternative trajectory by determining a trade-off between an estimated shortest distance to a target location and a determined likelihood of entering the predefined geographical zone.

6. The computer system of any previous claims, wherein the processing circuitry is configured to adapt the trajectory of the at least one autonomous vehicle to an alternative trajectory comprises at least one of stopping the vehicle in a location where stopping is preferable and directing the vehicle into an area where the primary positioning system is capable of receiving high-confidence positioning data.

7. The computer system of any previous claims, wherein the secondary positioning system is configured to estimate the vehicle position relative to the predefined geographical zone using odometry data collected over time, the odometry data comprising at least one of vehicle speed data, vehicle acceleration data, turning rate data, wheel rotation data, vehicle orientation data, and relative distance traveled data.

8. The computer system of any previous claims, wherein the processing circuitry is configured to predict an entrance of the vehicle into the predefined geographical zone based on an estimated vehicle position relative to the predefined geographical zone, and further configured to determine that the vehicle is approaching the predefined geographical zone based on the predicted entrance into the predefined geographical zone.

9. The computer system of any previous claims, wherein the processing circuitry is further configured to generate a position boundary zone around the at least one autonomous vehicle, the position boundary zone being indicative of the growth, over time, of position uncertainty of the at least one autonomous vehicle.

10. The computer system of claim 9, wherein the processing circuitry is configured to generate the position boundary zone based on a previously determined position of the at least one autonomous vehicle, the previously determined position being a positioning point determined from absolute positioning data.

11. The computer system of any previous claims, wherein the processing circuitry is configured to control the at least one autonomous vehicle according to the alternative trajectory.

12. The computer system of any previous claims, wherein the processing circuitry is configured to determine, based on a latest determined position and trajectory of the at least one autonomous vehicle, that the at least one autonomous vehicle, while being controlled by any one of the degraded primary positioning system and the secondary positioning system, approaches at least one other autonomous vehicle, and wherein the processing circuitry is configured to adapt the trajectory of the at least one autonomous vehicle based on the determined position and trajectory of the at least one other autonomous vehicle.

13. The computer system of any previous claims, wherein the processing circuitry is implemented in a central control system (410) for the confined geographical area.

14. A computer-implemented method (300) for trajectory planning of a plurality of autonomous vehicles (10, 10a to 10n), in particular a plurality autonomous heavy-duty vehicles, operating within a confined geographical area (200), the method comprising: - determining, by processing circuitry of a computer system, positions and trajectories of a plurality of autonomous vehicles within the confined geographical area, - determining, by the processing circuitry, that a primary positioning system of at least one autonomous vehicle receives low confidence positioning data or no positioning data, such that the at least one autonomous vehicle is controlled by any one of a degraded primary positioning system and a secondary positioning system; - determining, by the processing circuitry, and based on a previously determined position by the primary positioning system and the determined trajectory of the at least one autonomous vehicle, that the at least one autonomous vehicle, while being controlled by any one of the degraded primary positioning system and the secondary positioning system, is approaching a predefined geographical zone located within the confined geographical area, the predefined geographical zone having at least one operational restricting condition for the autonomous vehicles; and - determining, by the processing circuitry, to adapt the trajectory of the at least one autonomous vehicle to an alternative trajectory.

15. A computer program product comprising program code for performing, when executed by processing circuitry, the method of claim 14.

16. A non-transitory computer-readable storage medium comprising instructions which, when executed by processing circuitry, cause the processing circuitry to perform the method of claim 14.
